(19) Europäisches Patentamt
European Patent Office
Office européen des brevets

(11) **EP 3 902 289 A1**

(12) **EUROPÄISCHE PATENTANMELDUNG**

(43) Veröffentlichungstag:
**27.10.2021 Patentblatt 2021/43**

(51) Int Cl.:
*H04R 25/00* (2006.01)       *H01M 10/46* (2006.01)

(21) Anmeldenummer: **21168410.5**

(22) Anmeldetag: **14.04.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **23.04.2020 DE 102020205155**

(71) Anmelder: **Sivantos Pte. Ltd.**
**Singapore 539775 (SG)**

(72) Erfinder:
• **NARAMPANAWE, Nishshanka Bandara**
**649491 Singapore (SG)**
• **YAP, Heng Goh**
**544736 Singapore (SG)**
• **SIEW, Chee Kong**
**530371 Singapore (SG)**
• **ONG, Chuan En Andrew**
**680157 Singapore (SG)**

(74) Vertreter: **FDST Patentanwälte**
**Nordostpark 16**
**90411 Nürnberg (DE)**

(54) **BATTERIEMODUL UND HÖRVORRICHTUNG**

(57)     Ein erfindungsgemäßes Batteriemodul (10) für eine Hörvorrichtung (1) ist dazu eingerichtet, in einem induktiven Resonanzladeverfahren eingesetzt zu werden. Dazu weist das Batteriemodul (10) auf:
- eine Sekundärzelle (12),
- einen Sperrmantel (32), der die Sekundärzelle (12) umgibt und der zur Schirmung der Sekundärzelle (12) gegen ein Magnetfeld dient,
- einen Mantel (30), der aus permeablem Material gebildet ist und der außenseitig zu dem Sperrmantel (32) angeordnet ist, und
- eine Induktionsspule (14), die außenseitig zu dem Mantel (30) angeordnet und die zum induktiven Energieempfang eingerichtet ist, und die mit dem Mantel (30) eine Empfangsantenne zum Energieempfang bildet. Die Induktionsspule (14) ist dabei derart angeordnet ist, dass eine Spulenachse (26) der Induktionsspule (14) radial zu der Sekundärzelle (12) ausgerichtet ist.

Fig. 1

**Beschreibung**

Die Erfindung betrifft ein Batteriemodul. Des Weiteren betrifft die Erfindung eine Hörvorrichtung mit einem solchen Batteriemodul.

Hörvorrichtungen dienen üblicherweise zur Ausgabe eines Tonsignals an das Gehör des Trägers dieser Hörvorrichtung. Die Ausgabe erfolgt dabei mittels eines Ausgabewandlers, meist auf akustischem Weg über Luftschall mittels eines Lautsprechers (auch als "Hörer" oder "Receiver" bezeichnet). Häufig kommen derartige Hörvorrichtungen dabei als sogenannte Hörhilfegeräte (auch kurz: Hörgeräte) zum Einsatz, die zur Versorgung einer Person mit einer Hörminderung dienen. Dazu umfassen die Hörvorrichtungen normalerweise einen akustischen Eingangswandler (insbesondere ein Mikrophon) und einen Signalprozessor, der dazu eingerichtet ist, das von dem Eingangswandler aus dem Umgebungsschall erzeugte Eingangssignal (auch: Mikrophonsignal) unter Anwendung mindestens eines üblicherweise nutzerspezifisch hinterlegten Signalverarbeitungsalgorithmus derart zu verarbeiten, dass die Hörminderung des Trägers der Hörvorrichtung zumindest teilweise kompensiert wird. Insbesondere im Fall eines Hörhilfegeräts kann es sich bei dem Ausgabewandler neben einem Lautsprecher auch alternativ um einen sogenannten Knochenleitungshörer oder ein Cochlea-Implantat handeln, die zur mechanischen oder elektrischen Einkopplung des Tonsignals in das Gehör des Trägers eingerichtet sind. Unter den Begriff "Hörvorrichtung" fallen zusätzlich insbesondere auch Geräte wie z.B. sogenannte Tinnitus-Masker, Headsets, Kopfhörer und dergleichen.

Zur Energieversorgung der elektronischen Komponenten der Hörvorrichtung wird zwischenzeitlich mehr und mehr auf wiederaufladbare Energiespeicher (insbesondere in Form von auch als "Akkus" bezeichneten Sekundärzellen) zurückgegriffen. Grundsätzlich ist es dabei denkbar, herkömmliche Batterieformate durch gleichformatige Sekundärzellen zu ersetzen. Da letztere meist jedoch andere Spannungswerte ausgeben, ist regelmäßig eine Wandlerelektronik zur Spannungswandlung auf die von den elektronischen Komponenten benötigten Spannungswerte erforderlich, so dass ein bloßer Austausch meist nicht möglich ist. Außerdem soll ein Wiederaufladen der Sekundärzellen auch ohne Entnahme dieser aus der entsprechenden Hörvorrichtung möglich sein, um den Nutzungskomfort zu erhöhen. Da Hörvorrichtungen, insbesondere Hörhilfegeräte regelmäßig am Körper getragen werden und somit Körperflüssigkeiten, insbesondere Schweiß ausgesetzt sind, ist außerdem ein kabelloses Laden wünschenswert. Denn dadurch kann das Gehäuse der Hörvorrichtung besonders dicht gestaltet werden.

Kabelloses Laden erfolgt üblicherweise mittels einer induktiven Ladespule (auch: "Sekundärspule"), die im Ladebetrieb mit einer in einem Ladegerät angeordneten Sendespule (auch: "Primärspule") kabellos, konkret induktiv gekoppelt wird. Hierbei ist allerdings - gegebenenfalls neben der vorstehend beschriebenen Wandlerelektronik (falls die elektronischen Komponenten hinsichtlich ihres Betriebsspannungswerts nicht an die Ausgangsspannung der Sekundärzelle angepasst sind) - eine Ladeelektronik zur Steuerung des (zellenseitigen) Ladevorgangs erforderlich. Diese wird regelmäßig gemeinsam mit der Sekundärzelle zu einem "Batteriemodul" (teilweist auch als "Powermodul" bezeichnet) kombiniert.

Für induktives Laden ist eine vergleichsweise genaue Anordnung der Ladespule zu der Sendespule erforderlich. Des Weiteren müssen die beiden Spulen auch mit vergleichsweise geringem Abstand (regelmäßig im Bereich von etwa 3 Millimeter) zueinander angeordnet sein. Ansonsten wird die mögliche Energieausbeute bei der Energieübertragung beeinträchtigt, was zu langen Ladezyklen oder sogar zu einer unzureichenden oder schlimmstenfalls unmöglichen Aufladung der Sekundärspule führt. Gerade bei in dem Ohr zu tragenden Hörvorrichtungen (insbesondere bei sogenannten "in-dem-Ohr-Hörhilfegeräten", kurz auch als "IdO" oder ITE - für Englisch "in the ear" - bezeichnet) ist eine derart genaue oder nahe Anordnung zueinander aber bspw. aufgrund von häufig individuell angepassten Gehäusen meist nicht möglich.

Der Erfindung liegt die Aufgabe zugrunde, ein kabelloses Laden zu verbessern.

Diese Aufgabe wird erfindungsgemäß gelöst durch ein Batteriemodul mit den Merkmalen des Anspruchs 1. Des Weiteren wird diese Aufgabe erfindungsgemäß gelöst durch eine Hörvorrichtung mit den Merkmalen des Anspruchs 8. Vorteilhafte und teils für sich erfinderische Ausführungsformen und Weiterentwicklungen der Erfindung sind in den Unteransprüchen und der nachfolgenden Beschreibung dargelegt.

Das erfindungsgemäße Batteriemodul ist zum Einsatz in einer Hörvorrichtung, insbesondere einem Hörhilfegerät (kurz: "Hörgerät"), optional in einem BTE-Hörhilfegerät (d. h. einem hinter dem Ohr zu tragenden Hörhilfegerät, kurz als "BTE" bezeichnet) eingerichtet und vorgesehen. Gleichermaßen ist das erfindungsgemäße Batteriemodul aber auch für den Einsatz in einem in dem Ohr zu tragenden Hörhilfegerät (auch als "ITE" für "in the ear" bezeichnet) geeignet und auch dafür eingerichtet und vorgesehen. Außerdem ist das Batteriemodul dazu eingerichtet, in einem induktiven (oder auch "magnetischen") Resonanzladeverfahren eingesetzt zu werden.

Hierfür umfasst (d. h. enthält oder weist auf) das erfindungsgemäße Batteriemodul eine Sekundärzelle, einen Sperrmantel, der die Sekundärzelle umgibt und der zur Schirmung der Sekundärzelle gegen ein Magnetfeld dient, einen Mantel, der aus permeablem Material gebildet ist und der außenseitig zu dem Sperrmantel angeordnet ist, sowie eine Induktionsspule, die außenseitig zu dem Mantel aus permeablem Material angeordnet und die zum induktiven Energieempfang eingerichtet ist, und die zumindest mit dem Mantel aus permeablem Material - sowie optional auch zusätzlich zusammen mit dem Sperrmantel - eine Empfangsantenne zum Energieempfang bildet. Die Induktionsspule ist dabei derart angeordnet, dass eine Spulenachse der Induktionsspule radial zu der Sekundärzelle angeordnet ist.

Dadurch wird insbesondere beim Einsatz des Batteriemoduls in einer Hörvorrichtung eine nicht-parallele Anordnung der Induktionsspule zu einer weiteren Antennenspule der Hörvorrichtung, die regelmäßig für eine Datenübertragung eingerichtet und vorgesehen ist - insbesondere im Fall eines binauralen Hörhilfegerätesystems zur Datenübertragung zwischen linkem und rechtem Hörhilfegerät -, vereinfacht. Durch eine solche nicht-parallele Anordnung können vorteilhafterweise Störeinflüsse zwischen der Induktionsspule und der Antennenspule, für den Fall, dass beide Spulen für eine induktive Energie- bzw. Datenübertragung verwendet werden, verringert werden, auch wenn die jeweiligen "Arbeitsfrequenzen" (also eine Ladefrequenz und eine Datenübertragungsfrequenz) nicht gleich sind.

Unter den Begriff "BTE" fallen hier und im Folgenden insbesondere sowohl Hörhilfegeräte, die einen Lautsprecher im Gehäuse aufweisen und den Schall mittels eines Schallschlauchs zum Gehör des Nutzers ("Hörgeräteträgers") leiten, als auch Hörhilfegeräte, die einen außerhalb des Gehäuses, im bestimmungsgemäßen Tragezustand im Gehörgang positionierten, Lautsprecher aufweisen (auch als "RIC-BTE" oder dergleichen für "receiver in canal" bezeichnet).

In einer besonders bevorzugten Ausführung ist das Material und/oder die geometrische Struktur des Sperrmantels, des Mantels aus permeablem Material und/oder der Induktionsspule dabei derart gewählt, dass das Batteriemodul, insbesondere die Induktionsspule zum Energieempfang bei einem vorgegebenen Wert einer Ladefrequenz, der von einem Ladegerät bei der Erzeugung eines magnetischen Wechselfelds verwendet wird, einen Qualitätsfaktor von mehr als 35, bevorzugt von mindestens 45 aufweist.

Außerdem umgibt der Sperrmantel die Sekundärzelle zumindest an deren Mantelfläche ringförmig geschlossen.

Ein derart hoher Qualitätsfaktor ermöglicht eine resonante Kopplung der Empfangsantenne, insbesondere also der Induktionsspule, mit einer korrespondierenden Sendespule (d. h. insbesondere der o. g. Lade- oder Primärspule) des Ladegeräts. Dadurch wird wiederum ermöglicht, dass die Induktionsspule vergleichsweise ungenau gegenüber der Sendespule ausgerichtet sein kann, bspw. in einer Schrägstellung von bis zu 60 Grad (insbesondere hinsichtlich der Achsen der beiden Spulen) und/oder mit einem Abstand von bis zu 20 Millimeter. Des Weiteren ist eine wenigstens etwa doppelt so hohe Energieeffizienz gegenüber herkömmlicher induktiver Energieübertragung (d. h. ohne Nutzung resonanter Kopplung) möglich.

In einer bevorzugten Ausführung erstreckt sich die Induktionsspule nur über einen - vorzugsweise zusammenhängenden - Mantelflächenabschnitt der Sekundärzelle. Weiter bevorzugt liegt die Induktionsspule dabei flächig auf diesem Mantelflächenabschnitt auf. Insbesondere bildet der Mantelflächenabschnitt - insbesondere im Fall einer kreisförmigen Sekundärzelle, bspw. einer Knopfzelle - dabei die von einem durch einen Kreissektor beschriebenen Kreisbogenabschnitt aufgespannte (Kreiszylinder-) Teilfläche.

In einer zweckmäßigen Weiterbildung der vorgenannten Ausführung ist die Induktionsspule als Spiralspule ausgeführt. D. h. die Induktionsspule weist vorzugsweise - in eine senkrecht zur Spulenachse stehende Ebene projiziert - konzentrisch angeordnete Windungen auf, die insbesondere "ineinander geschachtelt" sind. Anders ausgedrückt verläuft ein, die Induktionsspule bildender Leiter von einem Spulenzentrum in im Durchmesser zunehmenden Schleifen zur Außenseite hin. Vorzugsweise ist die Induktionsspule außenseitig an den Sperrmantel und den Mantel aus permeablem Material der Kontur der Sekundärzelle folgend (insbesondere also gewölbt) angelegt. Insbesondere ist die Spiralspule dabei in projizierter Sicht in rechteckigen (erkanntermaßen mit abgerundeten Ecken) Schleifen verlegt und weist eine zentrale Ausnehmung (d. h. ist nicht bis zum Zentrum verlegt) auf.

In beiden vorstehend beschriebenen Ausführungen ist der Sperrmantel vorzugsweise um die gesamte Mantelfläche der Sekundärzelle umlaufend angeordnet. Optional weist der Sperrmantel auch eine Bodenfläche auf, so dass die Sekundärzelle in dem - in diesem Fall topfartig geformten - Sperrmantel einliegt.

In einer bevorzugten Ausführung ist die Empfangsantenne, insbesondere die Induktionsspule auf eine Resonanzfrequenz von mehr als 11 MHz, bevorzugt um 13,56 MHz (vorzugsweise mit einer Toleranz von etwa 1 bis maximal 5 Prozent) abgestimmt. Anders ausgedrückt weist der vorgegebene Wert der Ladefrequenz mehr als 11, bevorzugt um 13,56 MHz, weiter vorzugsweise von 13,56 MHz auf. Diese Resonanzfrequenz (oder Ladefrequenz) ist bspw. dann von besonderem Vorteil, wenn eine weitere nach dem induktiven Übertragungsprinzip arbeitende Spule, insbesondere die vorstehend genannte Antennenspule in einer das Batteriemodul umfassenden Vorrichtung, insbesondere der Hörvorrichtung vorhanden ist, die bevorzugt in einem anderen Frequenzbereich arbeitet (bspw. bei etwa 3 oder etwa 10 MHz). In einem solchen Fall ist das Risiko einer gegenseitigen Beeinflussung der beiden Spulen verringert.

In einer weiteren bevorzugten Ausführung ist das Material und/oder die Struktur (bspw. die Materialdicke) des Mantels aus permeablem Material derart gewählt, dass dieser (d. h. der Mantel) bei dem vorgegebenen Wert der Ladefrequenz einen Verlustfaktor von weniger als 0,03, vorzugsweise von weniger als 0,02 aufweist. Insbesondere wird hierfür der Zielwert des (insbesondere magnetischen) Verlustfaktors ("tan$\delta$"; engl. auch als "magnetic loss tangent" bezeichnet) für das Material in Abhängigkeit des bevorzugten Werts (oder auch: "Zielwert") des Qualitätsfaktors ("Q") anhand der Formel

$$\tan \delta = \frac{1}{Q} \tag{1}$$

bestimmt. Für ein spezifisches Material wird der Verlustfaktor anhand der Formel

$$\tan \delta = \frac{\mu''}{\mu'} \tag{2}$$

ermittelt, wobei μ" für den Imaginärteil der (komplexen) Permeabilitätszahl (oder auch: der "relativen Permeabilität") und μ' für den Realteil der Permeabilitätszahl steht.

In einer zweckmäßigen Weiterbildung ist der Mantel aus permeablem Material aus einem Ferrit gebildet oder enthält ein Ferrit. In erstem Fall ist der Mantel bspw. gesintert. In zweitem Fall ist der Mantel bspw. aus einem ferrit-gefüllten Kunststoff spritzgegossen. Bevorzugt ist der Mantel aber aus einer flexiblen (und vorzugsweise mehrlagigen) Folie, die Ferritpartikel enthält, gebildet.

In einer bevorzugten Ausführung sind für die Induktionsspule als geometrische Struktur eine Windungszahl und eine Leitungsquerschnittsfläche in Abhängigkeit von einer Abmessung, bevorzugt von dem Durchmesser der Sekundärzelle gewählt. Die Windungszahl sowie der Durchmesser der Sekundärzelle (mithin auch der Durchmesser der Induktionsspule) beeinflussen dabei die Induktivität der Induktionsspule. Andererseits führt jede Windung der die Induktionsspule bildenden Leitung (oder: des Leiters) auch zu einer Vergrößerung deren Länge, was wiederum zu einer Vergrößerung des Widerstands der Induktionsspule führt. Da der Qualitätsfaktor im Hinblick auf die Induktionsspule selbst durch

$$Q = \frac{\omega L}{R} \tag{3}$$

beschrieben wird, wobei ω die Kreisfrequenz der Resonanzfrequenz, L die Induktivität und R den (insbesondere Wechselstrom-) Widerstand der Induktionsspule beschreiben, und der Widerstand wiederum von der Länge und der Querschnittsfläche des entsprechenden Leiters abhängig ist, führt eine hohe Windungszahl zu einer vergleichsweise geringen Verbesserung oder sogar zu einer Verschlechterung des Qualitätsfaktors. Für eine Sekundärzelle, die hinsichtlich ihres Durchmessers vorzugsweise üblichen Hörgerätebatterien, bspw. einer "Type" 312 entspricht, wird insbesondere für die vorstehend beschriebene Spiralspule vorzugsweise eine Windungszahl von fünf herangezogen. Vorzugsweise kommt als Material der Induktionsspule Kupfer zum Einsatz. Kupfer hat dabei den Vorteil eines besonders geringen spezifischen Widerstands, sowie insbesondere auch einer geringen temperaturbedingten Änderung des Widerstands. Für die Leitungsquerschnittsfläche kommt vorzugsweise die Fläche zum Einsatz, die sich für einen Leiter mit kreisförmigem Querschnitt (insbesondere ein Draht oder eine Litze) mit einem Durchmesser von 0,31 mm ergibt. Mit anderen Worten kommt ein Draht oder eine Litze mit einem Durchmesser von 0,31 mm zum Einsatz oder alternativ ein Leiter mit polygonalem Querschnitt, dessen Fläche einen äquivalenten Wert aufweist.

Der vorstehend beschriebene Kreissektor, zu dem die Induktionsspule an die Mantelfläche der Sekundärspule angelegt ist, überstreicht in diesem Fall gleich oder weniger als die Hälfte, bevorzugt etwa (d. h. mit Abweichungen von maximal 10 Prozent) ein Drittel der (insbesondere kreisförmigen) Sekundärzelle.

In einer weiteren zweckmäßigen Ausführung ist die Induktionsspule mit einem Resonanzkondensator zur Einstellung der Resonanzfrequenz der Empfangsantenne gekoppelt. Vorzugsweise weist der Resonanzkondensator dabei eine dielektrische Absorption (insbesondere eine Art Restspannung oder wieder "aufgeladene" Spannung im Kondensator nach dem Entladen) mit einem Betrag von weniger als 0,5, bevorzugt weniger als 0,3 Prozent, eine Toleranz von 1 Prozent oder weniger und/oder einen Spannungs-Nennwert von 50 Volt auf. Weiter bevorzugt ist die Kapazität C des Resonanzkondensators anhand der Gleichung für die Kreisfrequenz ω eines passiven Bauelements

$$\omega = \frac{1}{\sqrt{LC}} \tag{4}$$

bei der vorgegebenen Kreisfrequenz ω und vorgegebener Induktivität L der Induktionsspule bestimmt. Da für das induktive Resonanzladeverfahren eine möglichst genaue Abstimmung der Resonanzfrequenz (die zu der vorgenannten Kreisfrequenz korrespondiert) erforderlich ist, kann mit einem hochpräzisen Resonanzkondensator der wenigstens einem, vorzugsweise allen der vorgenannten Kriterien genügt, die Resonanzfrequenz der Empfangsantenne auch besonders genau eingestellt werden.

In einer bevorzugten Ausführung ist das Material des Sperrmantels derart gewählt, dass die Permeabilitätszahl des Sperrmantels um mindestens zwei, vorzugsweise um drei Größenordnungen geringer ist als die Permeabilitätszahl eines Gehäusematerials der Sekundärzelle. Insbesondere ist als Material des Sperrmantels Kupfer gewählt. Dies insbesondere dahingehend vorteilhaft, da das Gehäusematerial der Sekundärzelle meist Edelstahl ist, dessen Permeabilitätszahl etwa im Bereich zwischen 750 und 1800 liegt. Die Permeabilitätszahl von Kupfer liegt dagegen etwa im Bereich von 1. Durch den Sperrmantel, insbesondere mit den vorstehenden Eigenschaften, können vorteilhafterweise Wirbelstromverluste in der Sekundärzelle und damit auch deren Erwärmung vermindert werden. Vorzugsweise wird dazu, insbesondere auf Basis der folgenden Formel die Stärke oder Dicke des Sperrmantels bestimmt

$$P = \frac{\pi^2 B_p^2 d^2 f^2}{6k\rho D}$$

(5).

Dabei beschreibt
P die Leistungsverluste,
$B_p$ die Magnetfeldspitze,
d die Dicke des Sperrmantels (oder den Durchmesser eines Drahts),
f die (Resonanz-) Frequenz,
k eine Konstante mit dem Betrag 1 für eine dünne Schicht und 2 für einen dünnen Draht,
p den spezifischen Widerstand des Materials, und
D die Dichte des Materials.

Beispielsweise wird als Stärke des Sperrmantels ein Wert von mindestens 0,08, vorzugsweise von 0,10 mm oder bis zu 0,12 mm herangezogen. Anders ausgedrückt handelt es sich bei dem Sperrmantel um eine Folie, insbesondere eine Kupferfolie. Diese ist bevorzugt als Band geschnitten und mit ihren Enden einander überlappend zu dem vorstehend beschriebenen Ring gelegt. Vorzugsweise ist die Stärke des Sperrmantels dabei derart gewählt, dass eine vierfache Leitschichtdicke (auch: "Skin-Tiefe" oder "skin depth") - die einer Dicke oder Tiefe entspricht, bei der die Eindringtiefe des (elektro-) magnetischen Felds auf 37 Prozent abgefallen ist - vorliegt. Dadurch wird vorteilhafterweise ermöglicht, dass nur noch etwa 2 Prozent des Felds zur Sekundärzelle vordringen und dort Wirbelströme hervorrufen kann.

In einer zweckmäßigen Ausführung ist die Induktionsspule als Drahtspule (d. h. aus einem massiven Draht) oder als Litzenspule (d. h. aus einer Mehrzahl von vergleichsweise dünnen Einzeldrähten, auch "Filamenten") ausgebildet. Weiter bevorzugt ist der Draht bzw. die Litze zumindest außenseitig isoliert, so dass ein Kurzschluss zwischen den Windungen unterbunden werden kann.

In einer grundsätzlich möglichen, alternativen Ausführung ist die Induktionsspule als Leiterbahn eines flexiblen Schaltungsträgers ausgebildet.

In einer zweckmäßigen Ausführung ist der Mantel aus permeablem Material nur im Bereich der Induktionsspule, insbesondere zwischen der Induktionsspule und dem Sperrmantel angeordnet. Der Mantel aus permeablem Material dient insbesondere zur Leitung des Magnetfelds im bestimmungsgemäßen Ladebetrieb, so dass eine Anordnung außerhalb der von der Induktionsspule abgedeckten Fläche nicht erforderlich ist. Somit kann hier vorteilhafterweise Material und damit verbundene Kosten eingespart werden.

Die erfindungsgemäße Hörvorrichtung umfasst das vorstehend beschriebene Batteriemodul. Vorzugsweist ist die Hörvorrichtung dabei als BTE-Hörhilfegerät ausgebildet.

Bevorzugt umfasst die Hörvorrichtung zusätzlich zu der vorstehend beschriebenen Induktionsspule auch die vorstehend genannte Antennenspule, die zur Datenübertragung eingerichtet ist. Die jeweiligen Spulenachsen der Induktionsspule und der Antennenspule sind dabei vorteilhafterweise schräg, bevorzugt senkrecht zueinander ausgerichtet.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend werden Ausführungsbeispiele der Erfindung anhand einer Zeichnung näher erläutert. Darin zeigen:

Fig. 1    in einer schematischen Seitenansicht eine Hörvorrichtung,
Fig. 2    in einem schematischen Schaltbild ein Batteriemodul der Hörvorrichtung,
Fig. 3    in einer schematischen Perspektivdarstellung das Batteriemodul, und

Fig. 4    in einer weiteren schematischen Perspektivdarstellung ein Ausführungsbeispiel einer Induktionsspule des Batteriemoduls.

Einander entsprechende Teile sind in allen Figuren stets mit gleichen Bezugszeichen versehen.

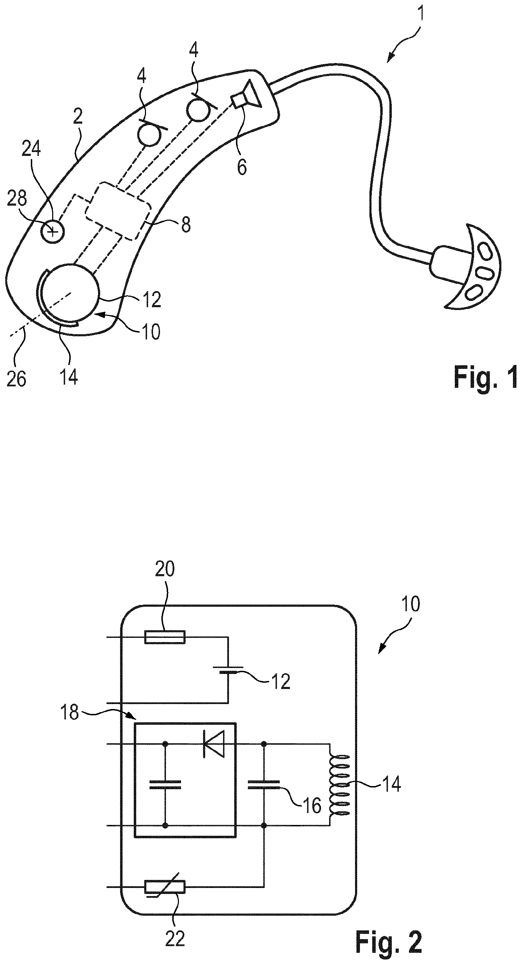

In Fig. 1 ist eine Hörvorrichtung in Form eines Hörhilfegeräts, konkret eines hinter dem Ohr eines Nutzers zu tragenden Hörhilfegeräts (kurz: "BTE 1"), dargestellt. Gleichermaßen kann die Hörvorrichtung aber auch in nicht näher dargestellter Art und Weise als in dem Ohr zu tragendes Hörhilfegerät ("ITE") ausgebildet sein. Das BTE 1 umfasst ein Gehäuse 2, in dem elektronische Komponenten des BTE 1 angeordnet sind. Bei diesen elektronischen Komponenten handelt es sich beispielsweise um zwei Mikrofone 4, einen Lautsprecher 6, einen Signalprozessor 8 und ein Batteriemodul 10. Die Mikrofone 4 dienen im bestimmungsgemäßen Betrieb des BTE 1 zum Empfang von Umgebungsschall und Wandlung dessen in elektrische Eingangssignale, die von dem Signalprozessor 8 verarbeitet (insbesondere gefiltert, frequenzabhängig verstärkt und/oder gedämpft etc.) werden. Die verarbeiteten Eingangssignale werden anschließend als Ausgangssignale an den Lautsprecher 6 ausgegeben und von diesem in Schallsignale gewandelt und an das Gehör des Nutzers weitergegeben.

Die zum Betrieb der elektronischen Komponenten erforderliche Energie wird im bestimmungsgemäßen Betrieb von dem Batteriemodul 10 bereitgestellt. Dieses umfasst als Energiespeicher eine wiederaufladbare Batterie 12 (auch als "Sekundärzelle" bezeichnet). Um die Batterie 12 zum Laden nicht aus dem Gehäuse 2 entnehmen zu müssen sowie um das Laden möglichst komfortabel zu gestalten, ist das Batteriemodul 10 zum kabellosen Laden eingerichtet. Dazu umfasst das Batteriemodul 10 eine Induktionsspule 14 (s. Fig. 2), um induktiv Ladeenergie, die von einer Ladespule (auch als Primärspule bezeichnet) ausgesendet wird, empfangen zu können. Um eine möglichst hohe Energieausbeute sowie eine möglichst hohe Toleranz bei der Ausrichtung der Induktionsspule 14 gegenüber der Primärspule zu ermöglichen, ist das Batteriemodul 10 für ein sogenanntes induktives oder magnetisches Resonanz-Ladeverfahren eingerichtet und vorgesehen. Dazu umfasst das Batteriemodul 10 einen Resonanzkondensator 16, der unmittelbar (d. h. ohne Zwischenschaltung weiterer Bauelemente) mit der Induktionsspule 14 verschaltet ist. Dieser Resonanzkondensator 16 ist derart gewählt, dass eine Resonanzfrequenz der Induktionsspule 14 auf ein möglichst schmales Frequenzband abgestimmt ist. Als Resonanzfrequenz ist im vorliegenden Ausführungsbeispiel eine Frequenz von 13,56 Megahertz gewählt.

Das Batteriemodul 10 weist im vorliegenden Ausführungsbeispiel außerdem einen Gleichrichter-Schaltkreis 18, eine mit der Batterie 12 verschaltete Sicherung 20 sowie einen Thermistor 22 zur thermischen Überwachung der Batterie 12 während eines Ladevorgangs auf. Optional weist das Batteriemodul 10 auch eine nicht näher dargestellte Ladeelektronik auf, die während des bestimmungsgemäßen Ladevorgangs die Energie in die Batterie 12 einspeist und Lade- und Entladevorgänge überwacht.

Das BTE 1 umfasst außerdem auch eine Antennenspule 24. Diese dient zur Datenübertragung auf ein externes Gerät, insbesondere auf ein zweites BTE 1 eines binauralen Hörgerätesystems (nicht näher dargestellt). Die Antennenspule 24 ist dabei ebenfalls zur induktiven Signalübertragung eingerichtet und vorgesehen. Um Störungen zwischen der Induktionsspule 14 und der Antennenspule 24 im bestimmungsgemäßen Betrieb möglichst gering halten zu können, sind beide mit ihren jeweiligen Spulenachsen 26 bzw. 28 senkrecht zueinander ausgerichtet (s. Fig. 1). Dazu ist die Induktionsspule 14 mit ihrer Spulenachse 26 radial zur (hier in Form einer Knopfzelle ausgebildeten) Batterie 12 angeordnet.

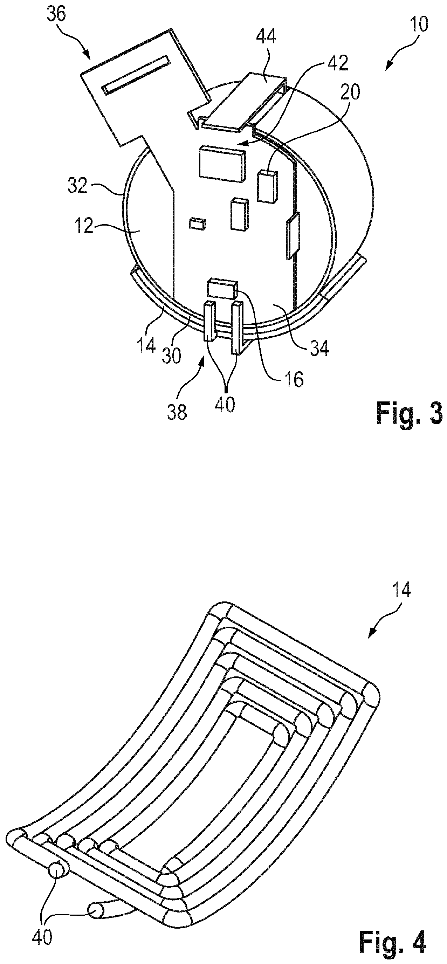

In Fig. 3 ist das Batteriemodul 10 näher dargestellt. Daraus geht hervor, dass die Induktionsspule 14 seitlich an die Batterie 12 angelegt ist und dabei nur einen Mantelflächenabschnitt der Batterie 12 überdeckt. Dieser Mantelflächenabschnitt korrespondiert zu einem Kreisbogen eines Kreissektors. D. h. die Induktionsspule 14 überdeckt nur einen zusammenhängenden Teil des Umfangs der Batterie 12. Unterhalb der Induktionsspule 14, d. h. zwischen der Batterie 12 und der Induktionsspule 14, ist ein Mantel 30 aus permeablem Material angeordnet, der zur Leitung von Magnetfeldlinien, die von der Primärspule ausgehen, dient.

Der Mantel 30 ist dabei durch eine ferrit-haltige Folie gebildet, die die Batterie 12 in Umfangsrichtung der Batterie 12 gesehen ebenfalls nur teilweise überdeckt. Konkret überdeckt der Mantel 30 den gleichen Mantelflächenabschnitt wie die Induktionsspule 14. Als Folie kommt im vorliegenden Ausführungsbeispiel die unter der Bezeichnung IFL04 geführte Folie der TDK Corporation mit einer Dicke von 0,2 mm zum Einsatz. Diese ermöglicht einen Verlustfaktor von weniger als 0,03 bei der gewählten Resonanzfrequenz und somit einen Qualitätsfaktor von etwa 40 für die Induktionsspule 14, konkret für die mittels der Induktionsspule 14 und dem Mantel 30 gebildete Empfangsantenne.

Unterhalb des Mantels 30 ist ein weiterer Mantel, als "Sperrmantel 32" bezeichnet, ringförmig geschlossen um die Batterie 12 gelegt. Dieser Sperrmantel 32 ist aus Kupfer gebildet und dient dazu, Wirbelstrom-Verluste im Gehäusematerial der Batterie 12, die aufgrund von in das Gehäusematerial der Batterie 12 einkoppelnden Magnetfeldern auftreten können, zu verringern oder zu verhindern.

Das Batteriemodul 10 umfasst weiterhin einen Schaltungsträger 34, der den Gleichrichter-Schaltkreis 18, die Sicherung 20 und den Resonanzkondensator 16 trägt. Dieser Schaltungsträger 34 ist stirnseitig zu der Batterie 12 angeordnet. Außerdem weist der Schaltungsträger 34 einen Anschlussabschnitt 36 zur Kontaktierung mit einem "main board" des BTE 1 auf, einen Anschlussbereich 38 zur Kontaktierung der Leiterenden 40 der Induktionsspule 14 sowie einen Anschlussbereich 42 für Kontaktfahnen 44 zur Kontaktierung der Batterie 12.

Wie aus Fig. 4 hervorgeht, ist die Induktionsspule 14 aus einem Draht (alternativ aus einer Litze) zu einer rechteckartigen Spiralspule mit konzentrischen Windungen gelegt. Anders als in Fig. 3 dargestellt, sind die Leiterenden 40 gemäß Fig. 4 an einer Schmalseite der Spiralspule herausgeführt. Dies wird in Abhängigkeit von der Positionierung der Induktionsspule 14 am Umfang der Batterie 12 sowie von der Position des Anschlussbereichs 38 des Schaltungsträgers 34 relativ zur Induktionsspule 14 gewählt.

Im vorliegenden Ausführungsbeispiel weist die Batterie 12 Abmessungen auf, die einer Knopfzelle des Typs 312 entsprechen. Für diese Abmessungen ist eine Windungsanzahl der Induktionsspule 14 auf Fünf gesetzt, da sich hierbei ein gutes Verhältnis aus Induktivität und Widerstand der Induktionsspule 14 ergibt. Als Material der Induktionsspule 14 ist dabei Kupfer gewählt. Die Flächenerstreckung der Induktionsspule beträgt im vorliegenden Ausführungsbeispiel 4 x 6 mm$^2$ bei einer Drahtstärke von 0,31 mm.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

Bezugszeichenliste

| | |
|---|---|
| 1 | BTE |
| 2 | Gehäuse |
| 4 | Mikrofon |
| 6 | Lautsprecher |
| 8 | Signalprozessor |
| 10 | Batteriemodul |
| 12 | Batterie |
| 14 | Induktionsspule |
| 16 | Resonanzkondensator |
| 18 | Gleichrichter-Schaltkreis |
| 20 | Sicherung |
| 22 | Therm istor |
| 24 | Antennenspule |
| 26 | Spulenachse |
| 28 | Spulenachse |
| 30 | Mantel |
| 32 | Sperrmantel |
| 34 | Schaltungsträger |
| 36 | Anschlussabschnitt |
| 38 | Anschlussbereich |
| 40 | Leiterenden |
| 42 | Anschlussbereich |
| 44 | Kontaktfahne |

**Patentansprüche**

1. Batteriemodul (10) für eine Hörvorrichtung (1), dazu eingerichtet, in einem induktiven Resonanzladeverfahren eingesetzt zu werden, aufweisend

- eine Sekundärzelle (12),
- einen Sperrmantel (32), der die Sekundärzelle (12) zumindest an deren Mantelfläche ringförmig geschlossen umgibt und der zur Schirmung der Sekundärzelle (12) gegen ein Magnetfeld dient,
- einen Mantel (30), der aus permeablem Material gebildet ist und der außenseitig zu dem Sperrmantel (32) angeordnet ist,
- eine Induktionsspule (14), die außenseitig zu dem Mantel (30) angeordnet und die zum induktiven Energieempfang eingerichtet ist, und die mit dem Mantel (30) eine Empfangsantenne zum Energieempfang bildet,

wobei die Induktionsspule (14) derart angeordnet ist, dass eine Spulenachse (26) der Induktionsspule (14) radial zu der Sekundärzelle (12) ausgerichtet ist.

2. Batteriemodul (10) nach Anspruch 1,
   wobei die Induktionsspule (14) sich nur über einen Mantelflächenabschnitt der Sekundärzelle (12) erstreckt.

3. Batteriemodul (10) nach Anspruch 1 oder 2,
   wobei die Induktionsspule (14) als Spiralspule ausgebildet ist.

4. Batteriemodul (10) nach einem der Ansprüche 1 bis 3,
   wobei für die Induktionsspule (14) als geometrische Struktur eine Windungszahl und eine Leitungsquerschnittsfläche in Abhängigkeit von einer Abmessung der Sekundärzelle (12) gewählt sind, und wobei insbesondere als Material der Induktionsspule (14) Kupfer gewählt ist.

5. Batteriemodul (10) nach Anspruch 4,
   wobei die Induktionsspule (14) fünf Windungen aufweist.

6. Batteriemodul (10) nach einem der Ansprüche 2 bis 5,
   wobei der Mantel (30) aus permeablem Material nur im Bereich der Induktionsspule (14) angeordnet ist.

7. Batteriemodul (10) nach einem der Ansprüche 1 bis 6,
   wobei das Material und/oder die Struktur des Mantels (30) aus permeablem Material derart gewählt ist, dass dieser bei dem vorgegebenen Wert der Ladefrequenz einen Verlustfaktor von weniger als 0,03, bevorzugt von weniger als 0,02 aufweist.

8. Hörvorrichtung (1), insbesondere Hörhilfegerät mit einem Batteriemodul (10) gemäß einem der Ansprüche 1 bis 7.

9. Hörvorrichtung (1) nach Anspruch 8,
   mit einer Antennenspule (24) zur Datenübertragung, wobei die Antennenspule (24) und die Induktionsspule (14) mit ihren Spulenachsen (26,28) senkrecht zueinander angeordnet sind.

**Fig. 1**

**Fig. 2**

Fig. 3

Fig. 4

**Europäisches Patentamt**

**European Patent Office**

**Office européen des brevets**

## EUROPÄISCHER RECHERCHENBERICHT

Nummer der Anmeldung

EP 21 16 8410

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2015 141687 A (NEC TOKIN CORP) 3. August 2015 (2015-08-03) | 1-6 | INV. H04R25/00 H01M10/46 |
| Y | * Abbildungen 1-3 * | 7-9 | |
| | ----- | | |
| X | EP 3 579 336 A1 (SIVANTOS PTE LTD [SG]) 11. Dezember 2019 (2019-12-11) | 1,2,6,8 | |
| Y | * Absatz [0013] * | 7-9 | |
| A | * Absatz [0052] * * Absatz [0063] - Absatz [0066] * * Absatz [0070] - Absatz [0075] * * Abbildungen 1-3,5A-6 * | 3-5 | |
| | ----- | | |
| Y | US 9 438 006 B2 (ROCKWELL DAVID A [US]; SHKUNOV VLADIMIR V [US]; RAYTHEON CO [US]) 6. September 2016 (2016-09-06) | 7 | |
| A | * Spalte 6, Zeile 61 - Zeile 65 * * Spalte 17, Zeile 36 - Zeile 41 * * Abbildung 11 * | 3-5 | |
| | ----- | | |

RECHERCHIERTE SACHGEBIETE (IPC)

H04R
H01M

Der vorliegende Recherchenbericht wurde für alle Patentansprüche erstellt

| Recherchenort | Abschlußdatum der Recherche | Prüfer |
|---|---|---|
| München | 8. September 2021 | Meiser, Jürgen |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 16 8410

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-09-2021

| Im Recherchenbericht angeführtes Patentdokument | Datum der Veröffentlichung | Mitglied(er) der Patentfamilie | Datum der Veröffentlichung |
|---|---|---|---|
| JP 2015141687 A | 03-08-2015 | KEINE | |
| EP 3579336 A1 | 11-12-2019 | CN 110581346 A | 17-12-2019 |
| | | DE 102018209189 A1 | 12-12-2019 |
| | | DE 202018104183 U1 | 12-09-2019 |
| | | EP 3579336 A1 | 11-12-2019 |
| | | JP 6918863 B2 | 11-08-2021 |
| | | JP 2019213201 A | 12-12-2019 |
| | | US 2019394584 A1 | 26-12-2019 |
| US 9438006 B2 | 06-09-2016 | EP 2853010 A1 | 01-04-2015 |
| | | IL 235496 A | 31-07-2018 |
| | | US 2013308177 A1 | 21-11-2013 |
| | | WO 2013176779 A1 | 28-11-2013 |

EPO FORM P0461

Für nähere Einzelheiten zu diesem Anhang : siehe Amtsblatt des Europäischen Patentamts, Nr.12/82